# EUROPEAN PATENT SPECIFICATION

(11) **EP 2 192 259 B1**
(45) Date of publication and mention of the grant of the patent: **28.03.2012**
(21) Application number: 09172783.4
(22) Date of filing: 12.10.2009
(51) Int. Cl.: E21B 4/18, E21B 7/28, E21B 7/20

(54) **Pipeline pressure device with endless conveyor members for use during a horizontal directional drilling process**
Leitungsdruckgerät mit endlosen Fördergliedern für den Einsatz während eines horizontalen Richtbohrprozesses
Dispositif de pression d'une conduite avec des membres de convoyeur sans fin pour utilisation au cours d'un processus de forage directionnel horizontal

(30) Priority: 28.10.2008 NL 2002143
(43) Date of publication of application: 02.06.2010
(73) Proprietor: Gebr. van Leeuwen Harmelen B.V., 3481 MC Harmelen (NL)
(72) Inventor: VAN LEEUWEN, Marinus Teunis, jr, 3451 BL Vleuten (NL); Van LEEUWEN, Anton Dirk, 3481 LM, HARMELEN (NL)
(74) Representative: Riemens, Roelof Harm

(56) References cited:
- EP-A- 1 126 130
- EP-A- 1 357 252
- WO-A-03/076760
- FR-A1- 2 774 521

## Description

The invention relates to a pipeline pressure device for reducing tensile forces on a conveyor pipeline during drawing of the conveyor pipeline in and through a shank which is drilled out in the ground and which extends at least partially in the horizontal direction. In particular, the invention relates to a pipeline pressure device of this type for use during a horizontal directional drilling process.

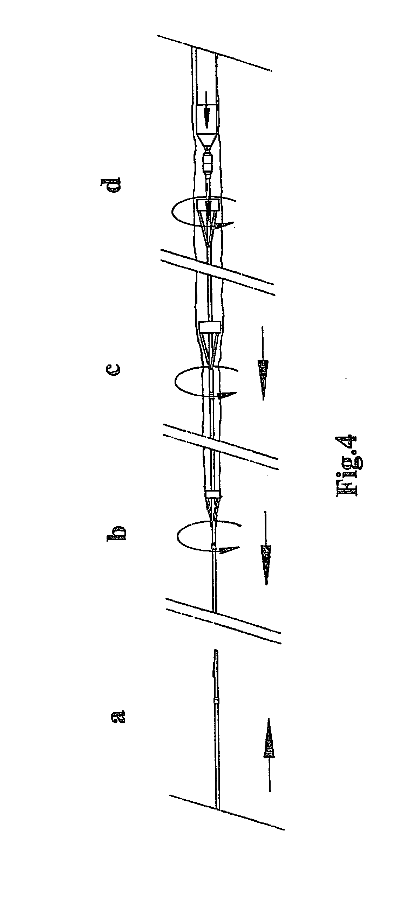

Horizontal directional drilling (HDD) is a no-dig technology which is used for the installation of underground infrastructure. Examples of this include the feeding of conveyor pipelines, such as natural gas and petroleum pipelines, water pipelines, telecommunications cables and electricity cables, under rivers, canals and large roads. In a first phase (see also Figure 4a), a drill pipeline, with a drill head provided at the free end thereof, is pushed through the ground, drilling as it goes. The drill head is hollow and is fed from the surface via the drill pipeline with bentonite, which holds the drilled-out drill shank open and at the same time removes excess earth. In a second phase (see also Figure 4b), the drill shank can be widened. After the complete shank has been drilled out and the drill head has returned above the ground, the drill head can be removed from the drill pipeline and replaced by a reamer. The reamer is withdrawn through the shank. During this withdrawing, the reamer enlarges the shank, while at the same time towing behind it a pipeline which provides drilling fluid in order to prevent the shank from collapsing. This reaming may be repeated a plurality of times, depending on the desired diameter of the conveyor pipeline to be installed (see also Figure 4c). The last phase (see also Figure 4d) is the drawing of the conveyor pipeline. When the reamer has enlarged the shank sufficiently, the reamer is uncoupled from the drill pipeline and replaced by a last reamer. The conveyor pipeline is in this case coupled to the reamer. A swivel between the reamer and the conveyor pipeline prevents rotation of the conveyor pipeline while the conveyor pipeline is towed behind the reamer. The conveyor pipeline is fully extended at the end of the shank and is placed on rollers, so that it can be retracted relatively flexibly behind the reamer on the drill shank.

In order to be able to draw the assembly made up of the drill pipeline, reamer and conveyor pipeline through the shank, a tensile force must be exerted thereon. In order to reduce this tensile force, it is known to exert, for example with the aid of a crane or an overpack clamping mechanism, an additional force on the conveyor pipeline at the side wherein the conveyor pipeline enters the shank, i.e. at the side opposite the original starting point of the shank.

The applicant has for a number of years used what is known as a tube pressure machine, which the applicant itself developed. This tube pressure machine is arranged at the end of the shank opposite the original starting point, where the conveyor pipeline is ready in an extended state. The tube pressure machine comprises a frame with three pairs of wheels connected drivably thereto. The conveyor pipeline is fed through between the three pairs of wheels. Driving of the wheels ensures that a thrust is exerted on the conveyor pipeline. This thrust reduces the tensile force required to draw the conveyor pipeline inward into the drilled-out shank. The tube pressure machine thus ensures that it is possible to achieve, on use of a drill-pulling device of a specific capacity, a greater length of conveyor pipeline to be drawn through a drilled-out shank.

A drawback of the known tube drilling machine is the fact that slippage can occur between one or more of the wheels and the conveyor pipeline. Such slippage has the risk that it may damage the conveyor pipeline. For example, if the conveyor pipeline comprises an anticorrosive PE coating, this coating may soon become damaged. This leads to major problems in the future, especially because it can considerably shorten the lifetime of the conveyor pipeline in the ground. The risk of slippage may be reduced by increasing the force pressing the wheels against the conveyor pipeline. However, this again increases the risk of deformation of or damage to the (coating of the) conveyor pipeline. A further drawback is the fact that the known tube pressure machine requires a mechanism for synchronizing the wheels in order to prevent the aforementioned slippage. This synchronization is carried out between the wheels of each pair with the aid of a chain. The pairs of wheels are synchronized with one another hydraulically.

The object of the invention is to obviate at least some of the above-mentioned drawbacks, or else to provide a usable alternative. In particular, the object of the invention is to provide a pipeline pressure device allowing a conveyor pipeline to be drawn or pushed in the ground over considerable distances with no risk of slippage or damage.

This object is achieved by a pipeline pressure device according to claim 1. The device comprises in this case a frame which is provided with support parts for placing on a sub-surface, and at least three drivable endless conveyor members which are drivably connected to the frame and which together delimit a feed-through opening for the conveyor pipeline. The endless conveyor members are each arranged with a longitudinal part around the feed-through opening and are configured for exerting a thrust on the conveyor pipeline if the conveyor pipeline is passed through the feed-through opening.

Each of the endless conveyor members is passed over at least two head rolls. A drive is provided for driving the endless conveyor members in rotation over these head rolls. The at least two head rolls for one of the endless conveyor members are each placed one after another in the axial direction along the feed-through opening. An endless conveyor member, which is passed over these head rolls placed one after another, extends as a result with a substantially straight longitudinal part along a substantially straight path between the two head rolls in a direction which is parallel to the axial direction of the feed-through opening or the conveyor pipeline respectively.

The endless conveyor members have relatively large friction surfaces, allowing a high thrust to be advantageously exerted in the axial direction on the conveyor pipeline without the need for a high force pressing the endless conveyor members in the radial direction against the conveyor pipeline. This prevents slippage and the conveyor pipeline remains undamaged and undeformed as a consequence of the more evenly distributed propulsion forces. It is easier for the conveyor pipeline to pass through bends at the original start and opposing end of the drilled-out shank. The conveyor pipeline is pressed by the thrust exerted thereon, as it were, toward the outer bend. As a result, the conveyor pipeline no longer runs, as a consequence of the tensile force which is also exerted thereon, up against the walls of the inner bends of the shank. The tension on the inner bend decreases, so to speak. In this way too, a reduction of the required tensile force may be achieved, or else it is possible to achieve, on use of a drill-pulling device of a specific capacity, a greater length of conveyor pipeline to be drawn through the drilled-out shank.

It is noted that EP 1 357 252 discloses a method for installing a cable duct around a cable which has already been buried in the ground. With this the outer end of the cable is connected with a core member of a magnetic material such that this assembly can be kept centered contactlessly by means of a solenoid. At the same time the cable duct is pushed around the cable by exerting a propelling force thereon by means of a pushing device. This pushing device comprises two pressure members which can be driven in rotation while exerting an axially directed pushing force on the cable duct.

In a preferred embodiment according to the present invention, the endless conveyor members are formed by caterpillar tracks. These are advantageously profiled rubber caterpillar tracks, owing to the good grip which these have on the conveyor pipeline.

In particular, at least one of the endless conveyor members is arranged so as to be adjustable with respect to the frame in a direction transverse to the feed-through opening

(the radial direction of the conveyor pipeline). This allows the device to be adapted to various diameters of the conveyor pipeline. Also preferably, the adjustability of the endless conveyor members is such that the feed-through opening delimited therebetween is suitable for pipeline diameters of at least 500-1,500 mm.

In one embodiment, the pipeline pressure device, and in particular the frame thereof, has maximum external dimensions which fit within a standard 20-foot (6.096-metre) container. This ensures that the device can easily be conveyed and can also easily be connected behind other components used during a horizontal directional drilling process.

In a further embodiment, the drive can be activated for driving the endless conveyor members in rotation for adjustably varying the speed and thrust of the endless conveyor members. A desired thrust and speed may thus be set as a function of the type of conveyor pipeline to be laid and the route of the shank to be installed. The drive used is for example an oil aggregate. The drive together with the endless conveyor members are preferably selected in such a way as to allow a thrust of more than 500 kN to be achieved. More particularly, the drive and the conveyor members are selected so as to allow a thrust of at least 1,000 kN to be obtained. This is in conjunction with the ability to maintain a safety factor of 2 which helps to ensure that it is impossible for slippage to occur under all circumstances, i.e. including for example wet, slushy conditions. The longitudinal part of the endless conveyor member at the side of the feed-through opening has for this purpose preferably an effective tread length of at least 0.60 metre, in particular at least 2.75 metres. Furthermore, the endless conveyor member has for this purpose preferably an effective tread width of at least 0.20 metre, in particular at least 0.30 metre.

Further embodiments are defined in the sub-claims.

The invention also relates to a system according to claim 12 and to a method according to claim 15.

The invention will be described in greater detail with reference to the appended drawings, in which:
Fig. 1 is a schematic perspective view of an embodiment of the pipeline pressure device according to the invention with three caterpillar tracks;
Fig. 2 is a view corresponding to Fig. 1 of a variant with four caterpillar tracks and container dimensions;
Fig. 3 is a schematic side view in cross section of a step from a horizontal directional drilling process using the pipeline pressure device according to Fig. 2;
Fig. 3.1-3.3 are enlarged partial views of Fig. 3; and
Fig. 4a-d are schematic side views in cross section of four successive phases from a horizontal directional drilling process from the prior art.

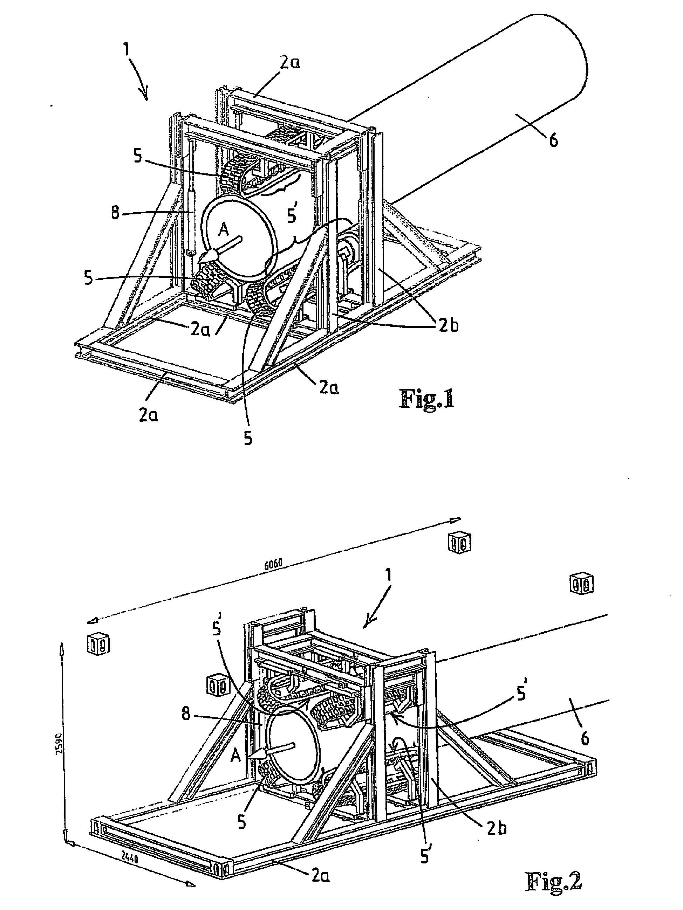

In Fig. 1, the pipeline pressure device is denoted in its entirety by reference numeral 1. The device 1 comprises a frame with support parts in the form of sleepers 2a and uprights 2b. Three endless conveyor members 5, which are in this case formed by profiled rubber caterpillar tracks, are provided between the sleepers 2a and the uprights 2b. A feed-through opening, through which a conveyor pipeline 6 having a round cross section is fed, is left clear between longitudinal parts 5' of the conveyor members 5, the longitudinal parts being positioned at the inside in a radial direction. The conveyor members 5 extend with their longitudinal parts 5', extending in the longitudinal direction, parallel to the axial direction A of the conveyor pipeline 6. The conveyor pipeline 6 is in this case a hollow tube or hose through which a medium, such as gas or liquid, may be fed, in particular a plastics material tube or a steel tube which is coated with a plastics material layer such as PE or synthetic resin. The endless conveyor members 5 are arranged symmetrically around the feed-through opening or the conveyor pipeline 6 passed therethrough.

The conveyor members 5 are passed over slide guides and head rolls, of each of which at least one may be driven by a drive (otherwise not shown). Driving of the conveyor members 5 ensures that a thrust is exerted on the conveyor pipeline 6 in the direction A. A synchronization mechanism, which ensures that the conveyor members run synchronously during operation, may be provided, if desired, between the respective conveyor members 5.

The conveyor members 5 may be displaced with respect to the frame in such a way that the feed-through opening becomes larger or smaller. Activatable piston/cylinder systems 8 are provided for this purpose. Other adjusting means, such as a manual adjuster, are also possible.

Fig. 2 shows a variant with four caterpillar tracks, like components being denoted by the same reference numerals. The design has remained largely the same, the caterpillar tracks being arranged, again, symmetrically around the feed-through opening. Furthermore, it is also the case for this embodiment that the frame has, with the endless conveyor members located within the internal circumference of the frame, dimensions which fit within a standard 20-foot (6.096-metre) container.

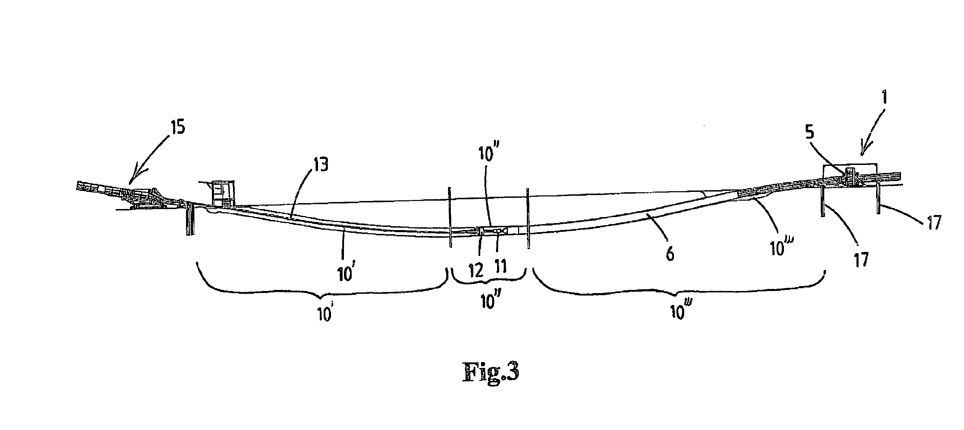

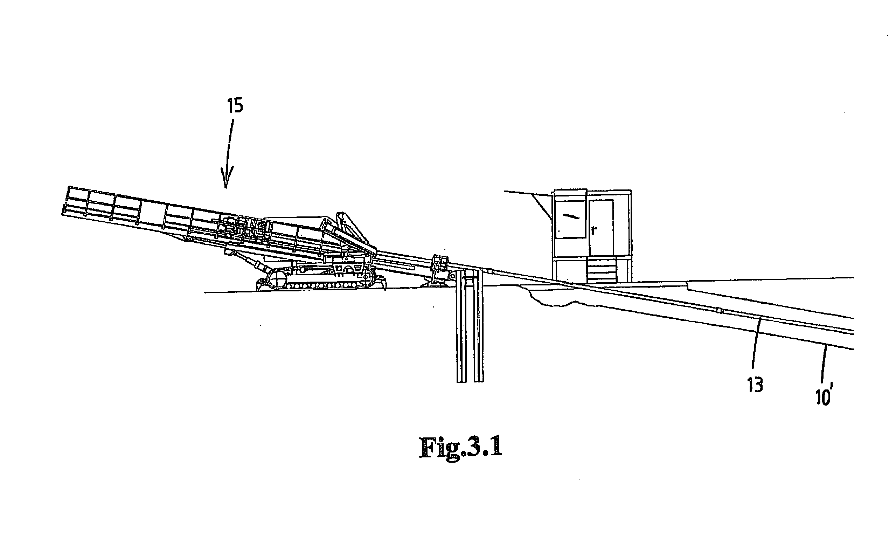

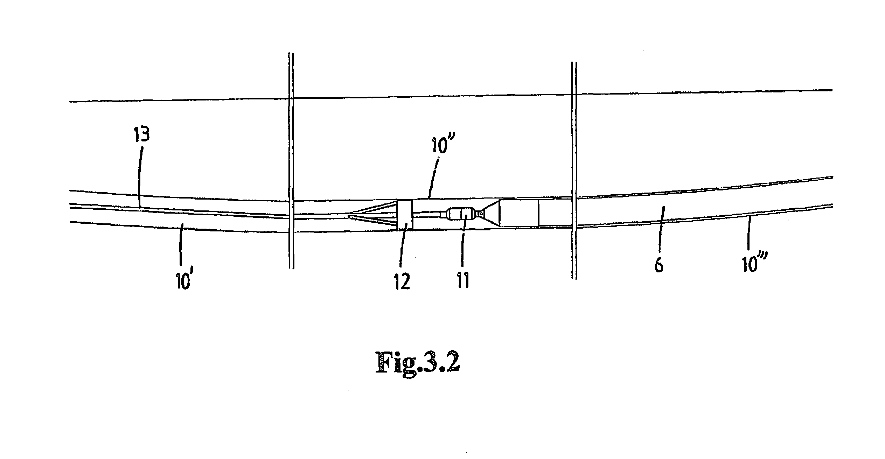

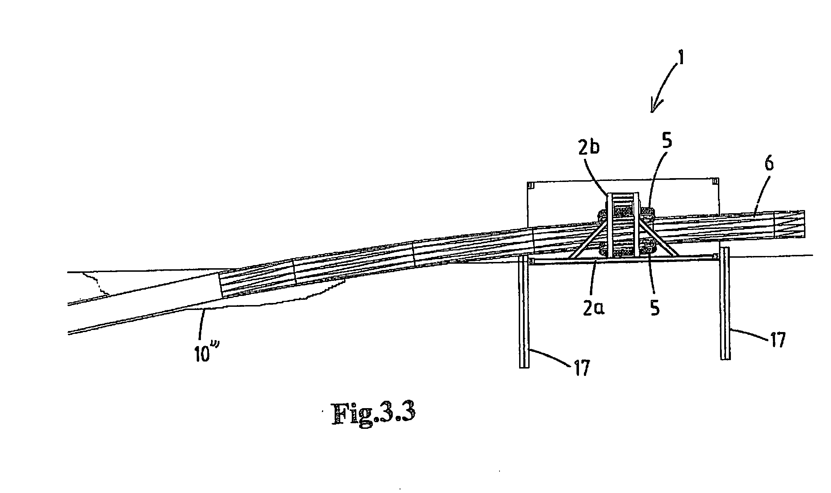

Fig. 3 shows the last phase (in accordance with Fig. 4d) of the horizontal directional drilling process mentioned in the introductory part of the description, namely the drawing of the conveyor pipeline 6 through a shank 10 which was previously drilled out and reamed in the ground. It may be seen that the conveyor pipeline 6 is suspended from a reamer 12 by means of a rotary coupling 11, such as a swivel. The reamer 12 is, in turn, suspended from a drill pipeline 13 which can be drawn through the shank 10 by means of a drill-pulling device 15 which is suitable for this purpose, also known as a rig. The drill-pulling device 15 is arranged at the starting point of the drilled-out shank 10. A supply of the drill pipeline 13, having a total length which is greater than the length of the previously drilled-out shank, is also located here. The pipeline pressure device 1 according to the invention is deposited at the end point of the drilled-out shank 10. The device 1 is in this case anchored to the ground by means of anchoring rods 17.

In a horizontal directional drilling phase preceding Fig. 3 (in accordance with Fig. 4a), the drilling pipeline 13 is passed through the ground, with a drill head provided at the free end thereof, with the aid of the drill-pulling device 15. The drill head is in this case driven and may in each case be adjusted in such a way that the drill head continues to drill out the route of the intended shank 10. This route of the intended shank 10 begins at an initial bend 10' which merges with a horizontal part 10", in order subsequently to pass upward out of the ground again at a final bend 10"'. The conveyor pipeline 6, which is already extended on rollers (not shown) and is also passed through the pipeline pressure device 1, is located at the end point of the shank 10.

This then gives rise to the situation as shown in Fig. 3 (and also in accordance with Fig. 4b). In this case, the shank 10 is completely drilled out, the drill head is uncoupled from the drill pipeline 13 and, instead thereof, the reamer 12 is coupled to the drill pipeline 13. Subsequently, the drill pipeline 13 is withdrawn through the shank 10 with the aid of the drill-pulling device 15 while widening the shank 10 with the reamer 12 and drawing the conveyor pipeline 6 inward into the shank 10. At the same time as the withdrawing of the drilling pipeline 13 through the shank 10 with the reamer 12 and the drawing of the conveyor pipeline 6 inward, a thrust is exerted on the conveyor pipeline 6 by driving the endless conveyor members 5 of the pipeline pressure device 1. Owing to this exerting of the high thrust which may be achieved with the pipeline pressure device 1 according to the invention, a considerable reduction of the required tensile force applied by the drill-pulling device 15 may be achieved, and/or a lower capacity of the drill-pulling device 15 may be sufficient, and/or a greater distance (shank length) may be bridged. As a result of the secure engagement of the endless conveyor members 5 on the conveyor pipeline 6, the large effective area of friction between the endless conveyor members 5 and the conveyor pipeline 6, no slippage occurs and the conveyor pipeline 6 remains undamaged. Nor do the initial bend 10' and the final bend 10"' present any further problems as a result of the fact that the conveyor pipeline 6 now continues to run therethrough, as a consequence of the propulsion, through the outer bends thereof.

In addition to the embodiments shown, many variants are possible. Thus, instead of caterpillar tracks, use may also be made of other endless conveyor members such as chains with grip elements provided thereon. It is also possible to build the device specifically for a given pipeline diameter and for this purpose to fasten, for example, the conveyor members to the frame at fixed positions. By varying the number of endless conveyor members, the effective tread lengths, the effective tread widths and/or the coefficient of friction thereof, various desired minimum threshold values for the thrust to be supplied may be achieved. In an advantageous variant, two or more pipeline pressure devices are connected in series one after another at the end of the shank to be drilled out. This allows even higher thrusts to be generated in a flexible manner without this leading to damage to the conveyor pipeline to be fed into the ground.

Thus, the invention provides a pipeline pressure device which may be built in an expedient and compact manner and can exert in a reliable manner thrusts on conveyor pipelines to be brought into the ground during a horizontal directional drilling process.

## Claims

1. Pipeline pressure device (1) for reducing tensile forces on a conveyor pipeline (6) during drawing of the conveyor pipeline (6) in a shank (10) which is drilled out in the ground and extends at least partially in the horizontal direction, comprising:
- a frame which is provided with support parts (2a) for placing on a sub-surface;
- pressure members which are rotatably connected to the frame and which together delimit a feed-through opening for the conveyor pipeline (6); and
- a drive for driving the pressure members in rotation;
the pressure members comprising friction surfaces for, during rotation, exerting in axial direction of the conveyor pipeline (6), a thrust A on the conveyor pipeline (6) if the conveyor pipeline (6) is passed through the feed-through opening,
**characterized in that**
the pressure members comprise at least three endless conveyor members (5) which are each arranged with a longitudinal part (5') around the feed-through opening, each endless conveyor member (5) being passed drivable in rotation over at least two head rolls, and the aforementioned longitudinal part (5') of each endless conveyor member (5) extending between the head rolls along the feed-through opening in a direction which is parallel to the axial direction of the conveyor pipeline (6).

2. Pipeline pressure device according to claim 1, wherein the endless conveyor members (5) are formed by caterpillar tracks.

3. Pipeline pressure device according to one of the preceding claims, wherein the endless conveyor members (5) are profiled rubber belts.

4. Pipeline pressure device according to one of the preceding claims, wherein the endless conveyor members (5) are arranged symmetrically around the feed-through opening.

5. Pipeline pressure device according to one of the preceding claims, wherein at least one of the endless conveyor members (5) is arranged so as to be adjustable with respect to the frame in a direction transverse to the feed-through opening.

6. Pipeline pressure device according to one of the preceding claims, wherein the frame has dimensions corresponding to a standard 20-foot (6.096-metre) container.

7. Pipeline pressure device according to one of the preceding claims, wherein the drive can be activated for adjustably varying the speed and thrust A of the endless conveyor members (5).

8. Pipeline pressure device according to one of the preceding claims, wherein the endless conveyor members (5) together delimit a feed-through opening having a diameter of between 500 and 1,500 mm.

9. Pipeline pressure device according to one of the preceding claims, wherein the longitudinal part (5') of the endless conveyor member (5) has a length of at least 0.6 m at the side of the feed-through opening.

10. Pipeline pressure device according to one of the preceding claims, wherein the endless conveyor members (5) and drive are configured for together exerting a thrust A on the conveyor pipeline (6) of at least 500 kN.

11. Pipeline pressure device according to one of the preceding claims, wherein the longitudinal parts (5') of the endless conveyor members (5) extend substantially in the horizontal direction at the side of the feed-through opening.

12. System for the directional horizontal drilling in the ground of a shank (10) and for subsequently bringing a conveyor pipeline (6) into the shank (10), comprising:
- a drill pipeline (13) with a drill head provided thereon;
- a conveyor pipeline (6);
- a drill-pulling device (15) for feeding the drill pipeline (13) in a directional manner through the ground with the drill head provided thereon for drilling out a shank (10) extending at least partially in the horizontal direction, and for afterwards withdrawing the drill pipeline (13) and the conveyor pipeline (6) secured thereto through the shank (10); and
- at least one pipeline pressure device (1) according to one of the preceding claims for reducing, by driving the endless conveyor members (5), tensile forces on the conveyor pipeline (6) during drawing inward into the drilled-out shank (10).

13. System according to claim 12, wherein at least two pipeline pressure devices (1) connected in series are provided.

14. System according to claim 12 or 13, wherein the drill-pulling device (15) is arranged at a starting point of the shank (10) to be drilled out and the pipeline pressure device (1) is arranged at an end point of the shank (10) to be drilled out.

15. Method for the directional horizontal drilling in the ground of a shank (10) and for subsequently bringing a conveyor pipeline (6) into the shank (10), including the steps:
- arranging a drill-pulling device (15) at a starting point of a shank to be drilled out;
- arranging at least one pipeline pressure device (1) according to one of the preceding claims at an end point of the shank (10) to be drilled out;
- the directional feeding, with the aid of the drill-pulling device (15) at least partially in the horizontal direction, of a drill pipeline (13) with a drill head provided thereon for drilling out the shank (10);
- coupling a conveyor pipeline (6) to the drill pipeline (13);
- withdrawing the conveyor pipeline (6) with the drill pipeline (13) and a reamer (12), which may if desired be provided on the drill pipeline (13), through the shank (10); and
- exerting, at the same time as the drawing of the conveyor pipeline (6) through the shank (10), a thrust A on the conveyor pipeline (6) by driving the endless conveyor members (5) of the at least one pipeline pressure device (1).

## Patentansprüche

1. Rohrleitungsdruckvorrichtung (1) zum Verringern von Zugkräften an einer Förderrohrleitung (6) während des Ziehens der Förderrohrleitung (6) in einem Schacht (10), der aus der Erde ausgebohrt wird und sich wenigstens teilweise in der horizontalen Richtung erstreckt, enthaltend:
- einen Rahmen, der mit Trägerteilen (2a) versehen ist, um auf einem Untergrund plaziert zu werden;
- Druckelemente, die mit dem Rahmen drehbar verbunden sind und zusammen eine Durchführöffnung für die Förderrohrleitung (6) definieren; und
- einen Antrieb, um die Druckelemente drehend anzutreiben;
wobei die Druckelemente Reibungsoberflächen enthalten, um, während der Drehung, in der Achsrichtung der Förderrohrleitung (6) einen Schub A auf die Förderrohrleitung (6) auszuüben, sofern die Förderrohrleitung (6) durch die Durchführöffnung verläuft,
**dadurch gekennzeichnet, dass**
die Druckelemente wenigstens drei Endlosförderelemente (5) enthalten, die jeweils mit einem Längsteil (5') die Durchführöffnung umgebend angeordnet sind, wobei jedes Endlosförderelement (5) drehbar antreibbar über wenigstens zwei Umlenkrollen geführt ist und sich der zuvor erwähnte Längsteil (5') jedes Endlosförderelementes (5) zwischen den Umlenkrollen entlang der Durchführöffnung in einer Richtung erstreckt, die parallel zu der Achsrichtung der Förderrohrleitung (6) verläuft.

2. Rohrleitungsdruckvorrichtung nach Anspruch 1, bei der die Endlosförderelemente (5) durch Raupenketten ausgebildet sind.

3. Rohrleitungsdruckvorrichtung nach einem der vorhergehenden Ansprüche, bei der die Endlosförderelemente (5) profilierte Gummiriemen sind.

4. Rohrleitungsdruckvorrichtung nach einem der vorhergehenden Ansprüche, bei der die Endlosförderelemente (5) symmetrisch um die Durchführöffnung angeordnet sind.

5. Rohrleitungsdruckvorrichtung nach einem der vorhergehenden Ansprüche, bei der wenigstens eines der Endlosförderelemente (5) derart angeordnet ist, dass es im Bezug auf den Rahmen in einer Richtung quer zu der Durchführöffnung einstellbar ist.

6. Rohrleitungsdruckvorrichtung nach einem der vorhergehenden Ansprüche, bei der der Rahmen Abmessungen hat, die einem standardisierten 20-Fuß-Container (20 Fuß = 6,096 m) entsprechen.

7. Rohrleitungsdruckvorrichtung nach einem der vorhergehenden Ansprüche, bei der der Antrieb aktiviert werden kann, um die Geschwindigkeit und Schub A der Endlosförderelemente (5) einstellbar zu variieren.

8. Rohrleitungsdruckvorrichtung nach einem der vorhergehenden Ansprüche, bei der die Endlosförderelemente (5) zusammen eine Durchführöffnung begrenzen, die einen Durchmesser zwischen 500 und 1.500 mm hat.

9. Rohrleitungsdruckvorrichtung nach einem der vorhergehenden Ansprüche, bei der der Längsteil (5') des Endlosförderelementes (5) eine Länge von wenigstens 0,6 m auf der Seite der Durchführöffnung hat.

10. Rohrleitungsdruckvorrichtung nach einem der vorhergehenden Ansprüche, bei der die Endlosförderelemente (5) und der Antrieb dazu eingerichtet sind, zusammen einen Schub A auf die Förderrohrleitung (6) von wenigstens 500 kN auszuüben.

11. Rohrleitungsdruckvorrichtung nach einem der vorhergehenden Ansprüche, bei der die Längsteile (5') der Endlosförderelemente (5) im wesentlichen in der horizontalen Richtung auf der Seite der Durchführöffnung verlaufen.

12. System für das horizontale Richtungsbohren eines Schachtes (10) in der Erde und zum anschließenden Ausbringen einer Förderrohrleitung (6) in den Schacht (10), enthaltend:
- eine Bohrrohrleitung (13) mit einem daran angebrachten Bohrkopf;
- eine Förderrohrleitung (6);
- eine Bohrzugvorrichtung (15) zum Zuführen der Bohrrohrleitung (13) in einer gerichteten Art und Weise durch die Erde, wobei der Bohrkopf an der Bohrrohrleitung angebracht ist, um einen Schacht (10) auszubohren, der sich wenigstens teilweise in der horizontalen Richtung erstreckt, und zum anschließenden Zurückziehen der Bohrrohrleitung (13) und der Förderrohrleitung (6), die an dieser angebracht ist, durch den Schacht (10); und
- wenigstens eine Rohrleitungsdruckvorrichtung (1) nach einem der vorhergehenden Ansprüche zur Verminderung von Zugkräften auf die Förderrohrleitung (6) während des Ziehens nach innen in den ausgebohrten Schacht (10) durch Antreiben der Endlosförderelemente (5).

13. System nach Anspruch 12, bei dem wenigstens zwei Rohrleitungsdruckvorrichtungen (1) vorgesehen sind, die in Reihe verbunden sind.

14. System nach Anspruch 12 oder 13, bei dem die Bohrzugvorrichtung (15) an einem Anfangspunkt des auszubohrenden Schachtes (10) angeordnet ist und die Rohrleitungsdruckvorrichtung (1) an einem Endpunkt des auszubohrenden Schachtes (10) angeordnet ist.

15. Verfahren zum horizontalen Richtungsbohren eines Schachtes (10) in der Erde und zum anschließenden Ausbringen einer Förderrohrleitung (6) in den Schacht (10), umfassend folgende Schritte:
- Anordnen einer Bohrzugvorrichtung (15) an einem Anfangspunkt eines auszubohrenden Schachtes;
- Anordnen wenigstens einer Rohrleitungsdruckvorrichtung (1) nach einem der vorhergehenden Ansprüche an einem Endpunkt des auszubohrenden Schachtes (10);
- gerichtetes Zuführen einer Bohrrohrleitung (13) mit einem an dieser angebrachten Bohrkopf mit Hilfe der Bohrzugvorrichtung (15) wenigstens teilweise in der horizontalen Richtung zum Ausbohren des Schachtes (10);
- Koppeln einer Förderrohrleitung (6) an die Bohrrohrleitung (13);
- Zurückziehen der Förderrohrleitung (6) mit der Bohrrohrleitung (13) und einem Bohrlochräumer (12), der, sofern dies gewünscht ist, an der Bohrrohrleitung (13) vorgesehen ist, durch den Schacht (10); und
- Ausüben eines Schubes A auf die Förderrohrleitung (6) durch Antreiben der Endlosförderelemente (5) der wenigstens einen Rohrleitungsdruckvorrichtung (1) gleichzeitig mit dem Ziehen der Förderrohrleitung (6) durch den Schacht.

## Revendications

1. Dispositif de pression de conduite (1) pour réduire les forces de traction sur une conduite de convoyeur (6) pendant la traction de la conduite de convoyeur (6) dans une tige (10) qui est forée dans le sol et s'étend au moins partiellement dans la direction horizontale, comprenant :
un châssis qui est doté de parties de support (2a) destiné à être placé en profondeur ;
des moyens de pression qui sont raccordés en rotation au châssis et qui délimitent ensemble une ouverture de passage d'alimentation pour la conduite de convoyeur (6) ; et
une commande pour entraîner les éléments de pression en rotation ;
les éléments de pression comprenant des surfaces de friction pour, pendant la rotation, exercer, dans une direction axiale de la conduite de convoyeur (6), une poussée A sur la conduite de convoyeur (6) si la conduite de convoyeur (6) traverse l'ouverture de passage d'alimentation ;
**caractérisé en ce que** :
les éléments de pression comprennent au moins trois éléments de convoyeur sans fin (5) qui sont chacun agencés avec une partie longitudinale (5') autour de l'ouverture de passage d'alimentation, chaque élément de convoyeur sans fin (5) étant entraîné en rotation sur au moins deux cylindres d'amenée, et la partie longitudinale (5') mentionnée précédemment de chaque élément de convoyeur sans fin (5) s'étendant entre les cylindres d'amenée le long de l'ouverture de passage d'alimentation dans une direction qui est parallèle à la direction axiale de la conduite de convoyeur (6).

2. Dispositif de pression de conduite selon la revendication 1, dans lequel les éléments de convoyeur sans fin (5) sont formés par des chenilles.

3. Dispositif de pression de conduite selon l'une quelconque des revendications précédentes, dans lequel les éléments de convoyeur sans fin (5) sont des courroies en caoutchouc profilées.

4. Dispositif de pression de conduite selon l'une quelconque des revendications précédentes, dans lequel les éléments de convoyeur sans fin (5) sont agencés de manière symétrique autour de l'ouverture de passage d'alimentation.

5. Dispositif de pression de conduite selon l'une quelconque des revendications précédentes, dans lequel au moins l'un des éléments de convoyeur sans fin (5) est agencé afin d'être réglable par rapport au châssis dans une direction transversale par rapport à l'ouverture de passage d'alimentation.

6. Dispositif de pression de conduite selon l'une quelconque des revendications précédentes, dans lequel le châssis a des dimensions correspondant à un conteneur de 20 pieds (6,096 mètres) standard.

7. Dispositif de pression de conduite selon l'une quelconque des revendications précédentes, dans lequel la commande peut être actionnée pour modifier de manière ajustable la vitesse et la poussée A des éléments de convoyeur sans fin (5).

8. Dispositif de pression de conduite selon l'une quelconque des revendications précédentes, dans lequel les éléments de convoyeur sans fin (5) délimitent ensemble une ouverture de passage d'alimentation ayant un diamètre compris entre 500 et 1 500 mm.

9. Dispositif de pression de conduite selon l'une quelconque des revendications précédentes, dans lequel la partie longitudinale (5') de l'élément de convoyeur sans fin (5) a une longueur d'au moins 0,6 m du côté de l'ouverture de passage d'alimentation.

10. Dispositif de pression de conduite selon l'une quelconque des revendications précédentes, dans lequel les éléments de convoyeur sans fin (5) et la commande sont configurés pour exercer ensemble une poussée A sur la conduite de convoyeur (6) d'au moins 500 kN.

11. Dispositif de pression de conduite selon l'une quelconque des revendications précédentes, dans lequel les parties longitudinales (5') des éléments de convoyeur sans fin (5) s'étendent sensiblement dans la direction horizontale du côté de l'ouverture de passage d'alimentation.

12. Système pour le forage horizontal directionnel dans le sol d'une tige (10) et pour amener ensuite une conduite de convoyeur (6) dans la tige (10), comprenant :
une conduite de forage (13) avec une tête de forage prévue sur cette dernière ;
une conduite de convoyeur (6) ;
un dispositif de traction de forage (15) pour amener la conduite de forage (13) d'une manière directionnelle dans le sol avec la tête de forage prévue sur cette dernière pour forer une tige (10) s'étendant au moins partiellement dans la direction horizontale, et pour retirer ensuite la conduite de forage (13) et la conduite de convoyeur (6) fixée sur cette dernière à travers la tige (10) ; et
au moins un dispositif de pression de conduite (1) selon l'une quelconque des revendications précédentes, pour réduire, en entraînant les éléments de convoyeur sans fin (5), les forces de traction sur la conduite de convoyeur (6) pendant le retrait vers l'intérieur dans la tige (10) forée.

13. Système selon la revendication 12, dans lequel on prévoit au moins deux dispositifs de pression de conduite (1) raccordés en série.

14. Système selon la revendication 12 ou 13, dans lequel le dispositif de traction de forage (15) est agencé à un point de départ de la tige (10) à forer et le dispositif de pression de conduite (1) est agencé à un point de fin de la tige (10) à forer.

15. Procédé pour le forage horizontal directionnel dans le sol d'une tige (10) et pour amener ensuite une conduite de convoyeur (6) dans la tige (10), comprenant les étapes consistant à :
agencer un dispositif de traction de forage (15) à un point de départ de la tige à forer ;
agencer au moins un dispositif de pression de conduite (1) selon l'une quelconque des revendications précédentes, à un point de fin de la tige (10) à forer ;
amener de manière directionnelle, à l'aide du dispositif de traction de forage (15), au moins partiellement dans la direction horizontale, une conduite de forage (13) avec une tête de forage prévue sur cette dernière pour forer la tige (10) ;
coupler une conduite de convoyeur (6) à la conduite de forage (13) ;
retirer la conduite de convoyeur (6) avec la conduite de forage (13) et un alésoir (12) qui peut, si nécessaire, être prévu sur la conduite de forage (13), à travers la tige (10) ; et
exercer, en même temps que le retrait de la conduite de convoyeur (6) à travers la tige (10), une poussée A sur la conduite de convoyeur (6) en entraînant les éléments de convoyeur sans fin (5) du au moins un dispositif de pression de conduite (1).
